(19) Europäisches Patentamt
European Patent Office
Office européen des brevets

(11) **EP 3 460 547 B1**

(12) **FASCICULE DE BREVET EUROPEEN**

(45) Date de publication et mention
de la délivrance du brevet:
**15.12.2021 Bulletin 2021/50**

(51) Int Cl.:
***G02B 6/30*** *(2006.01)*

(21) Numéro de dépôt: **18196353.9**

(22) Date de dépôt: **24.09.2018**

(54) **DISPOSITIF DE COUPLAGE OPTIQUE POUR UN CIRCUIT PHOTONIQUE**

OPTISCHE KOPPLUNGSVORRICHTUNG FÜR EINEN PHOTONENSCHALTKREIS

OPTICAL COUPLING DEVICE FOR A PHOTONIC CIRCUIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.09.2017 FR 1758885**

(43) Date de publication de la demande:
**27.03.2019 Bulletin 2019/13**

(73) Titulaire: **Commissariat à l'énergie atomique
et aux énergies alternatives
75015 Paris (FR)**

(72) Inventeurs:
• **HASSAN, Karim
89470 MONETEAU (FR)**
• **BOUTAMI, Salim
38100 GRENOBLE (FR)**
• **MENEZO, Sylvie
38500 VOIRON (FR)**

(74) Mandataire: **Brevalex
56, Boulevard de l'Embouchure
B.P. 27519
31075 Toulouse Cedex 2 (FR)**

(56) Documents cités:
**FR-A1- 3 027 689      US-A1- 2004 156 589
US-A1- 2014 314 374**

EP 3 460 547 B1

**Description**

**DOMAINE TECHNIQUE**

L'invention concerne le domaine de l'injection et/ou l'extraction de lumière, dans et/ou vers un guide d'onde intégré dans ou sur un substrat.

L'invention concerne notamment un couplage optique entre un circuit photonique et une fibre optique.

**ÉTAT DE LA TECHNIQUE ANTÉRIEURE**

Le couplage optique entre une fibre optique et un guide d'onde intégré sur un substrat, utilise classiquement un réseau de diffraction.

L'article de Dirk Taillaert & al., « Grating Couplers for Coupling between Optical Fibers and Nanophotonic Waveguides », Japanese Journal of Applied Physics, Vol. 45, No. 8A, 2006, pp. 6071-6077, décrit un exemple de réalisation d'un tel couplage optique.

Cet article décrit une structure en silicium, d'épaisseur constante, qui comporte un pavé de 12 $\mu$m de large, un adaptateur de largeur décroissante, et un guide d'onde nanophotonique, juxtaposés les uns à la suite des autres.

Le réseau de diffraction est gravé dans le pavé large.

Le réseau de diffraction s'étend sur environ 70 nm de profondeur, dans l'épaisseur du pavé, et présente une période A = $\lambda/n_{eff}$, où $\lambda$ est la longueur d'onde de couplage et $n_{eff}$ l'indice effectif du mode guidé dans le guide d'onde.

Le réseau de diffraction permet d'extraire la lumière hors du plan de la structure en silicium, dans une direction d'interférences constructives cohérentes qui dépend de la longueur d'onde. La lumière ainsi extraite est injectée dans une fibre optique orientée quasiment selon la normale au substrat. Un réflecteur permet de rediriger vers la fibre optique une partie de la lumière extraite vers le demi-espace inférieur.

L'article enseigne également de désaccorder légèrement le réseau de diffraction pour s'affranchir de la diffraction du second ordre (apodisation), générant de la réflexion. L'article illustre en particulier un réseau de diffraction présentant des rainures de plus en plus larges au fur et à mesure que l'on se rapproche du guide d'onde.

Une telle structure permet d'obtenir une bande passante à 1 dB de 40 nm.

On connaît également dans l'art antérieur les documents suivants :

- FR 3 027 689, qui se rapporte à une structure de couplage de la lumière comprenant un coupleur à réseau de diffraction ;
- US 2014/314374, qui se rapporte à un coupleur optique à réseau de diffraction, dans lequel le facteur de remplissage du réseau de diffraction est non uniforme ; et
- US 2004/156589, qui se rapporte à un coupleur optique à réseau de diffraction, incorporant un ou plusieurs réflecteurs de Bragg distribués.

Un objectif de la présente invention est d'augmenter la largeur de la bande passante d'un couplage entre un guide d'onde intégré dans ou sur un substrat, et un élément externe tel qu'une fibre optique.

**EXPOSÉ DE L'INVENTION**

Cet objectif est atteint avec un dispositif de couplage comportant un substrat dans ou sur lequel sont intégrés :

- un guide d'onde, apte à guider un faisceau lumineux centré sur une longueur d'onde centrale $\lambda_0$; et
- un coupleur optique d'injection et/ou extraction.

Selon l'invention, le dispositif de couplage comprend, superposés, un étage de guidage comportant le guide d'onde et un étage de couplage comportant le coupleur optique.

Le coupleur optique est constitué d'au moins une structure à gradient d'indice.

L'indice optique moyen dans la structure à gradient d'indice varie de manière monotone décroissante dans des plans parallèles au plan du substrat, au fur et à mesure que l'on s'éloigne du guide d'onde.

L'indice optique moyen est défini comme une valeur moyenne de l'indice optique dans un volume cubique de côté égal à :

$$\frac{\lambda_0}{2 * n_{eff}}$$

avec $n_{eff}$ l'indice effectif du mode guidé dans le guide d'onde,

ladite valeur moyenne étant une moyenne quadratique des indices optiques de matériaux constitutifs dudit volume cubique, pondérée par la proportion volumique de chacun de ces matériaux dans le volume cubique.

Le coupleur optique selon l'invention réalise un couplage hors plan. En d'autres termes, il est apte, en utilisation, à dévier l'axe de propagation d'un faisceau lumineux pour l'injecter dans un plan parallèle au substrat et/ou l'extraire hors d'un plan parallèle au substrat. Le faisceau lumineux est plus particulièrement injecté et/ou extrait du guide d'onde.

Dans tout le texte, le plan du substrat désigne un plan parallèle à une face inférieure ou une face supérieure du substrat.

Le coupleur optique coopérant avec le guide d'onde, on comprend qu'il est apte à coupler un faisceau lumineux centré sur la même longueur d'onde centrale $\lambda_0$.

Selon l'invention, le coupleur optique n'est pas formé directement dans l'étage de guidage comportant le guide d'onde. Il est formé plutôt dans un étage de couplage distinct de l'étage de guidage. L'étage de couplage et l'étage de guidage sont superposés le long d'un axe orthogonal au plan du substrat.

Selon l'invention également, le coupleur optique comporte au moins une structure à gradient d'indice.

En fonctionnement, un faisceau lumineux centré sur la longueur d'onde $\lambda_0$ circule dans la structure à gradient d'indice, selon un chemin optique parallèle à l'axe longitudinal du guide d'onde. Le faisceau lumineux s'étend alors tour à tour dans une succession de volumes cubiques tels que définis ci-dessus.

Selon l'invention, on définit un indice optique moyen d'un volume cubique comme étant une moyenne quadratique des indices optiques des matériaux constitutifs de ce volume cubique. Du fait des dimensions particulièrement réduites du cube, la lumière n'est sensible, dans le cube, qu'à cet indice optique moyen.

La variation de l'indice optique moyen dans la structure à gradient d'indice permet alors de dévier le faisceau lumineux circulant dans la structure à gradient d'indice, et ainsi de réaliser le couplage optique souhaité.

En d'autres termes, selon l'invention, la déviation de faisceau à l'origine du couplage optique ne met pas en œuvre des phénomènes de diffraction, mais un phénomène de déviation de faisceau par modification progressive d'une valeur locale d'indice optique.

Les inventeurs ont montré que le dispositif de couplage optique selon l'invention permet d'accéder à de plus grandes largeurs spectrales de couplage que dans l'art antérieur.

En outre, le principe de déviation de faisceau mis en œuvre dans l'invention permet d'améliorer l'efficacité d'un couplage avec une fibre optique située au-dessus du dispositif de couplage, en particulier lorsque la fibre optique est orientée selon un axe normal au plan du substrat.

En effet, avec un réseau de diffraction selon l'art antérieur, la lumière à incidence normale, injectée dans le dispositif de couplage, se répartit équitablement selon deux chemins optiques de sens opposés, un seul d'entre eux menant au guide d'onde. Au contraire, dans l'invention, la structure asymétrique peut permettre que la lumière à incidence normale, injectée dans le dispositif de couplage, soit couplée vers une unique direction.

Cet effet est avantageux, puisqu'un alignement de la fibre optique selon la normale au substrat peut être réalisé avec de meilleures précisions d'alignement qu'un alignement selon un axe incliné relativement à cette normale. Cette précision d'alignement améliore la maîtrise du centrage d'une bande spectrale couplée.

Enfin, le principe de déviation de faisceau mis en œuvre dans l'invention permet d'extraire la lumière vers un seul demi-espace, à l'extérieur du dispositif de couplage optique selon l'invention. On peut ainsi s'affranchir d'un miroir de renvoi.

De manière avantageuse, l'au moins une structure à gradient d'indice (coupleur optique) du dispositif de couplage selon l'invention présente une épaisseur apparente supérieure ou égale à $\dfrac{\lambda_0}{n_{eff}}$, l'épaisseur apparente étant définie selon un axe orthogonal au plan du substrat et désignant une épaisseur cumulée traversée par le faisceau lumineux provenant du guide d'onde ou arrivant dans le guide d'onde, ledit faisceau lumineux étant centré sur la longueur d'onde centrale $\lambda_0$.

Pour cela, le coupleur optique peut présenter une épaisseur (réelle) supérieure ou égale à $\dfrac{\lambda_0}{n_{eff}}$, l'épaisseur étant définie selon un axe orthogonal au plan du substrat.

En complément ou en variante, le dispositif de couplage selon l'invention peut comporter au moins un réflecteur, agencé en vis-à-vis du coupleur optique de manière à augmenter l'épaisseur apparente de ce dernier. Le coupleur optique peut ainsi présenter une épaisseur réelle bien inférieure à $\dfrac{\lambda_0}{n_{eff}}$, tout en présentant une épaisseur apparente supérieure ou égale à $\dfrac{\lambda_0}{n_{eff}}$.

En particulier, le dispositif de couplage selon l'invention peut comporter en outre un premier réflecteur, disposé du côté du coupleur optique opposé à l'étage de guidage.

En complément, le dispositif de couplage selon l'invention peut comporter en outre un second réflecteur, disposé du même côté du coupleur optique que l'étage de guidage.

Le dispositif de couplage selon l'invention peut présenter en outre l'une ou plusieurs des caractéristiques définies dans les revendications dépendantes de dispositif.

L'invention concerne également un procédé de fabrication d'un dispositif de couplage selon l'invention, dans lequel l'au moins une structure à gradient d'indice est réalisée à l'aide de plusieurs cycles successifs de :

- dépôt d'une couche de support ;
- gravure d'ouvertures traversantes dans la couche de support ; puis
- remplissage des ouvertures gravées par un matériau de remplissage et planarisation.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1A à 1C illustrent de manière schématique un premier mode de réalisation d'un dispositif de couplage selon l'invention ;
- la figure 2 illustre de manière schématique un deuxième mode de réalisation d'un dispositif de couplage selon l'invention ;
- les figures 3A et 3B illustrent des résultats de simulation d'un couplage mis en œuvre dans le dispositif de couplage de la figure 2 ;
- la figure 4 illustre de manière schématique un troisième mode de réalisation d'un dispositif de couplage selon l'invention ;
- la figure 5 illustre de manière schématique une variante du dispositif de la figure 2;
- les figures 6 et 7 illustrent de manière schématique un quatrième et un cinquième modes de réalisation d'un dispositif de couplage selon l'invention ;
- les figures 8A et 8B illustrent de manière schématique un procédé de fabrication d'un dispositif de couplage selon l'invention ;
- la figure 9 illustre le dispositif de couplage obtenu à l'aide du procédé des figures 8A et 8B ; et
- les figures 10A et 10B illustrent de manière schématique, en vue de dessus, d'autres modes de réalisation d'une structure à gradient d'indice selon l'invention.

## EXPOSÉ DÉTAILLÉ DE MODES DE RÉALISATION PARTICULIERS

On a représenté sur les figures les axes d'un repère orthonormé (Oxyz).

Dans tout le texte, l'épaisseur désigne la dimension selon l'axe (Oz), la largeur désigne la dimension selon l'axe (Oy), et la longueur désigne la dimension selon l'axe (Ox).

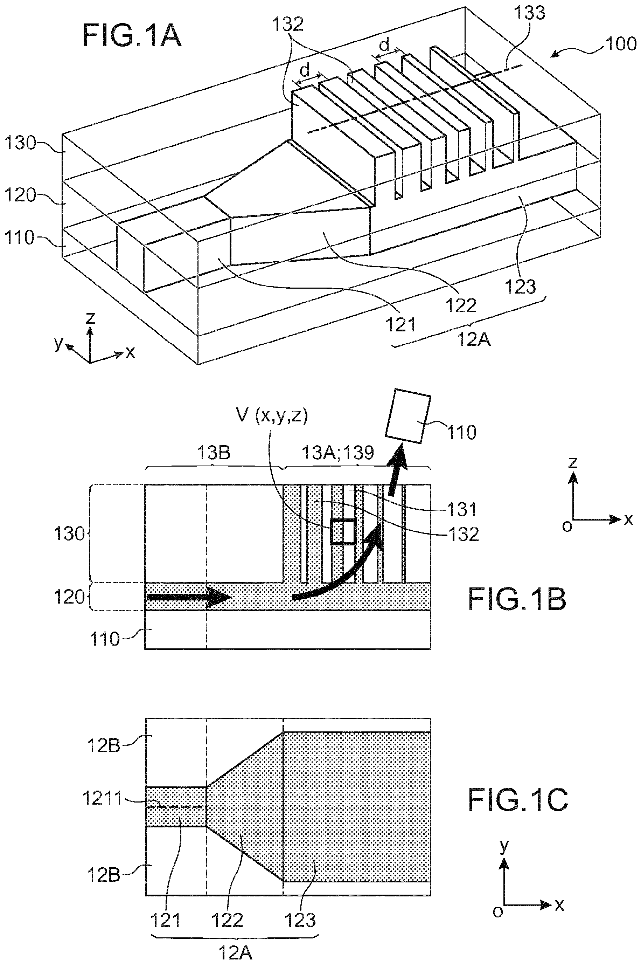

Les figures 1A, 1B et 1C illustrent de manière schématique un premier mode de réalisation d'un dispositif de couplage 100 selon l'invention, respectivement selon une vue en perspective, selon une vue en coupe dans un plan (xOz), et selon une vue en coupe dans un plan (xOy).

Le dispositif de couplage selon l'invention comprend un substrat 110, délimité verticalement par une face supérieure 110A et une face inférieure 110B, parallèles au plan (xOy). Les faces supérieure 110A et inférieure 110B forment ici les plus grandes faces du substrat 110.

Le substrat 110 présente ici une forme de parallélépipède rectangle.

Il est constitué ici de silice ($SiO_2$).

Le dispositif de couplage 100 comprend également un étage de guidage 120, et un étage de couplage 130.

Le substrat 110, l'étage de guidage 120 et l'étage de couplage 130 sont superposés ensemble selon l'axe (Oz), orthogonal au plan (xOy). Ici, l'étage de guidage 120 est disposé entre le substrat 110 et l'étage de couplage 130. Ici, l'étage de guidage 120 s'étend en contact physique direct avec l'étage de couplage 130.

L'étage de guidage 120 est délimité verticalement par deux faces parallèles au plan (xOy).

L'étage de guidage 120 comporte une structure 12A, délimitée verticalement par deux faces parallèles au plan (xOy), et de même épaisseur que l'étage de guidage 120.

La structure 12A, dite haut indice, comporte juxtaposés les uns à la suite des autres selon l'axe (Ox), un guide d'onde 121 de type guide d'onde nanophotonique, un adaptateur 122, et un pavé 123 (voir figures 1A et 1C).

On nomme ici « guide d'onde » uniquement la région de cœur du guide d'onde, d'indice élevé.

Le guide d'onde 121 est adapté à guider un faisceau lumineux centré sur une longueur d'onde centrale $\lambda_0$.

Il présente ici une section constante carrée ou rectangulaire dans des plans parallèles à (yOz).

Sa plus grande dimension est parallèle à l'axe (Ox), et définit son axe longitudinal 1211. L'axe longitudinal 1211 correspond à la direction de propagation de la lumière dans le guide d'onde 121.

Il n'est pas exclu que le guide d'onde 121 forme une portion d'un plus grand guide d'onde.

Le pavé 123 présente une largeur bien supérieure à celle du guide d'onde 121.

Le pavé 123 présente par exemple une largeur supérieure à 10 $\mu$m, tandis que le guide d'onde 121 présente une largeur inférieure ou égale à 1 $\mu$m.

Le pavé 123 est constitué ici, de manière avantageuse mais optionnelle, du même matériau que le guide d'onde 121.

L'adaptateur 122, plus connu sous le terme « taper », est situé entre le guide d'onde 121 et le pavé 123, en contact physique direct avec l'un et l'autre. Il s'agit d'un adaptateur adiabatique.

L'adaptateur 122 est constitué ici, de manière avantageuse mais optionnelle, du même matériau que le guide d'onde 121.

Il présente une largeur décroissante le long de l'axe (Ox), depuis une première extrémité du côté du pavé 123, jusqu'à une seconde extrémité du côté du guide d'onde 121. De préférence, sa largeur décroît depuis une largeur égale à celle du pavé 123, jusqu'à une largeur égale à celle du guide d'onde 121.

Le pavé 123 et l'adaptateur 122 réalisent ensemble une adaptation de mode adiabatique du mode guidé dans le guide d'onde. Ce sont des éléments connus de l'art antérieur.

La structure 12A est constituée ici de silicium (Si).

Dans l'étage de guidage 120, la structure 12A est encadrée par deux régions bas indice 12B, d'indice optique inférieur à celui de la structure 12A (ou, le cas échéant, aux indices optiques respectifs du guide d'onde 121, de l'adaptateur 122 et du pavé 123).

Dans tout le texte, les indices optiques sont définis à la longueur d'onde $\lambda_0$.

De préférence, les régions bas indice 12B sont constituées d'un même matériau que la couche directement adjacente à l'étage de guidage, du côté opposé à l'étage de couplage (ici le substrat 110).

Ici, les deux régions bas indice 12B sont constituées de silice.

Pour faciliter la compréhension de l'invention, les deux régions bas indice 12B sont représentées en transparence à la figure 1A.

Selon des variantes non représentées, les régions bas indice 12B peuvent comprendre différentes zones constituées de différents matériaux, voire même des cavités remplies d'un vide ou un gaz.

On décrit ensuite l'étage de couplage 130.

L'étage de couplage 130 est délimité verticalement par deux faces parallèles au plan (xOy).

L'étage de couplage 130 intègre un coupleur optique 13A.

Le coupleur optique 13A est délimité verticalement par deux faces parallèles au plan (xOy), et s'étend verticalement sur toute l'épaisseur de l'étage de couplage 130.

Le coupleur optique 13A est apte à réaliser un couplage optique d'injection et/ou extraction vers et/ou depuis le guide d'onde. L'injection désigne l'injection d'un faisceau lumineux dans un plan parallèle au plan (xOy), plus particulièrement dans le guide d'onde 121, ici via le pavé 123 et l'adaptateur 122. L'extraction désigne l'extraction d'un faisceau lumineux hors d'un plan parallèle au plan (xOy), plus particulièrement hors du guide d'onde 121, ici via l'adaptateur 122 et le pavé 123.

Ici, le coupleur optique 13A est constitué d'une structure à gradient d'indice 139, constituée ici d'une alternance, le long d'un axe parallèle à (Ox), de premières régions 131 et de secondes régions 132 (voir figures 1A et 1B).

Les premières et secondes régions 131, 132 s'étendent ici chacune sur toute la largeur de la structure à gradient d'indice 139.

Les premières régions 131 remplissent entièrement les espaces entre les secondes régions.

Les premières régions 131 présentent un indice optique inférieur à celui des secondes régions 132.

De préférence, les secondes régions présentent un indice optique proche de celui de la structure 12A de l'étage de guidage, par exemple à 20% près.

Les secondes régions 132 peuvent être constituées du même matériau que la structure 12A de l'étage de guidage, ici du silicium.

En variante, elles peuvent être constituées d'un matériau différent. Par exemple, la structure 12A est en silicium, et les secondes régions 132 en silicium amorphe.

Les premières régions 131 sont de préférence constituées du même matériau que les régions bas indice 12B de l'étage de guidage, ici de la silice.

Pour faciliter la lecture de la figure 1A, les premières régions 131 y sont représentées en transparence.

Le restant de l'étage de couplage 130 est rempli par une couche bas indice 13B, d'indice optique inférieur à celui de la structure 12A. La couche bas indice 13B est constituée de préférence du même matériau que les régions bas indice 12B de l'étage de guidage, ici de la silice.

Le guide d'onde 121 est ainsi entièrement entouré d'un matériau d'indice inférieur, faisant office de gaine. En particulier, le substrat 110 forme ici une gaine inférieure pour le guide d'onde 121, les régions bas indice 12B forment des gaines latérales, et la couche bas indice 13B forme une gaine supérieure. Ici, le guide d'onde 121 est en silicium entouré de silice. Il est adapté au guidage d'un faisceau lumineux centré sur une longueur d'onde $\lambda_0$ = 1550 *nm*.

On décrit ensuite de manière détaillée la structure à gradient d'indice 139.

Ici, la structure à gradient d'indice 139 est superposée au pavé 123 de l'étage de guidage, le long d'un axe parallèle à (Oz). Elle s'étend ici en contact physique direct avec le pavé 123.

Elle présente une forme de parallélépipède rectangle, délimité verticalement par deux faces parallèles aux plans (xOy). Elle présente de préférence la même largeur que le pavé 123, selon l'axe (Oy). Elle s'étend ici sur toute la longueur du pavé 123, selon l'axe (Ox).

Ici, les secondes régions 132 présentent des formes de parallélépipèdes rectangles, qui s'étendent chacun sur toute la largeur de la structure à gradient d'indice. Leurs faces de plus grandes dimensions s'étendent dans des plans parallèles à (yOz), et sont nommées « faces d'entrée et sortie ». Les faces d'entrée et sortie sont donc orthogonales à l'axe longitudinal du guide d'onde.

Ici, les premières et secondes régions s'étendent chacune sur toute l'épaisseur de l'étage de guidage, selon l'axe (Oz). La structure à gradient d'indice 139 présente donc une invariance selon cet axe (Oz).

On note d, une distance centre à centre entre deux secondes régions 132 directement voisines dans toute la structure à gradient d'indice 139.

Cette distance d est définie selon un axe 133, parallèle à l'axe longitudinal du guide d'onde 121, parallèle à l'axe (Ox).

Cette distance d vérifie :

$$d \leq \frac{\lambda_0}{2 * n_{eff}} \qquad (1)$$

avec $n_{eff}$ l'indice effectif du mode guidé dans le guide d'onde 121, en fonctionnement, et $\lambda_0$ la longueur d'onde centrale que le guide d'onde 121 est apte à guider.

Pour rappel, l'indice effectif d'un mode guidé dans un guide d'onde est défini de la façon suivante :

$$n_{eff} = \beta * \frac{\lambda_0}{2\pi} \qquad (2)$$

avec $\lambda_0$ la longueur d'onde centrale du faisceau lumineux se propageant dans le guide d'onde et $\beta$ la constante de phase du guide d'onde.

$\beta$ dépend de la longueur d'onde et du mode du faisceau lumineux se propageant dans le guide d'onde, ainsi que des propriétés de ce guide d'onde (en particulier indices de réfraction et géométrie).

$\beta$ est définie par : A(x) = A(0)exp($\gamma$x), où x est une abscisse selon un chemin de propagation dans le guide d'onde, A(x) est l'amplitude complexe en fonction de *x* d'un faisceau lumineux se propageant dans le guide d'onde, et $\beta$ est la partie imaginaire de $\gamma$.

On peut parfois considérer que l'indice effectif désigne l'indice optique moyen du milieu tel qu'il est « vu » par un mode du faisceau lumineux se propageant dans le guide d'onde. Par conséquent, en pratique, l'équation (1) peut être approximée par :

$$d \leq \frac{\lambda_0}{2 * n_c} \qquad (3)$$

avec $n_c$ l'indice optique du guide d'onde 121.

En pratique, la distance d est au moins inférieure à la moitié de la longueur d'onde $\lambda_0$, et de préférence inférieure ou égale au quart de $\lambda_0$.

Ici, la distance d reste constante dans toute la structure à gradient d'indice 139.

En revanche, les secondes régions 132 présentent des longueurs qui varient le long de l'axe 133, parallèle à (Ox).

La structure à gradient d'indice 139 forme ainsi une structure pseudo-périodique, de pas d.

La longueur des secondes régions 132 varie de manière monotonement décroissante le long de l'axe 133, en s'éloignant du guide d'onde 121.

De façon complémentaire, la longueur des premières régions 131 varie de manière monotone croissante le long de l'axe 133, en s'éloignant du guide d'onde 121.

En d'autres termes, le rapport entre la longueur d'une seconde région 132, d'une part, et la somme des longueurs de ladite seconde région et d'une première région 131 adjacente, d'autre part, varie de manière monotonement décroissante en s'éloignant du guide d'onde, le long de l'axe 133. Parmi les deux premières régions 131 adjacentes à une seconde région 132, on considère par exemple la première région 131 la plus éloignée du guide d'onde 121.

Ledit rapport peut également être défini comme un rapport entre la longueur d'une seconde région et la longueur d'une pseudo-période de la structure à gradient d'indice.

De préférence, la variation monotone est également linéaire.

En fonctionnement, un faisceau lumineux centré sur la longueur d'onde $\lambda_0$ circule dans la structure à gradient d'indice 139, en traversant successivement les premières et secondes régions.

Ce faisceau lumineux est orienté selon un vecteur dont l'une des composantes est parallèle à l'axe (Ox).

La condition sur la distance d a pour conséquence que ce faisceau lumineux à $\lambda_0$ n'est pas diffracté par les sauts d'indice. Il ne « voit » que des valeurs locales d'un indice optique moyen.

Chaque valeur locale de l'indice optique moyen est définie dans un volume cubique $V(x,y,z)$ de côté égal à $\frac{\lambda_0}{2*n_{eff}}$, centré sur un point de coordonnées $(x,y,z)$ dans la structure à gradient d'indice. A chaque point du trajet optique du faisceau lumineux dans la structure à gradient d'indice correspond donc une valeur spécifique de l'indice optique moyen, vu par le faisceau lumineux.

L'indice optique moyen $n_{moy}$ dans le volume cubique $V(x,y,z)$ vaut :

$$n_{moy} = \sqrt{f_{n1} * n_1{}^2 + (1 - f_{n1}) * n_2{}^2} \qquad (4)$$

avec $f_{n1}$ la proportion du matériau des premières régions dans ledit volume cubique (entre 0 et 1), $n_1$ l'indice optique des premières régions, et $n_2$ l'indice optique des secondes régions de la structure à gradient d'indice.

En fonctionnement, la lumière provenant du guide d'onde 121 va fuir vers la structure à gradient d'indice 139, celle-ci présentant un indice optique proche de celui du guide d'onde, du côté de ce dernier.

Ensuite, la lumière se propage dans la structure à gradient d'indice 139, selon un chemin optique présentant une composante selon l'axe (Ox) et une composante selon l'axe (Oy).

La longueur des secondes régions 132 varie de manière monotonement décroissante le long de l'axe 133, en s'éloignant du guide d'onde 121.

Par conséquent, la proportion du matériau des secondes régions 132 dans un volume cubique $V(x,y,z)$ varie de manière monotonement décroissante, en s'éloignant du guide d'onde, le long de l'axe 133.

Par conséquent, l'indice optique moyen dans un volume cubique $V(x,y,z)$ varie également de manière monotonement décroissante, en s'éloignant du guide d'onde, le long de l'axe 133. Ce gradient d'indice dévie la lumière en la courbant, le front d'onde étant ralenti du côté du guide d'onde, dans la structure à gradient d'indice. En particulier, la pente locale d'un rayon lumineux se propageant dans la structure 139 varie progressivement le long de l'axe 133.

De manière évidente, la même condition est vérifiée, selon chaque axe parallèle à l'axe 133, passant par la structure à gradient d'indice, et sur lequel on peut centrer une série de volumes cubiques $V(x,y,z)$ de côté égal à $\frac{\lambda_0}{2*n_{eff}}$.

La même condition est donc vérifiée selon chacun des axes correspondant à la projection orthogonale, dans un plan (xOy) parallèle au plan du substrat, de l'un des rayons du faisceau se propageant dans la structure à gradient d'indice.

La déviation de la lumière dans la structure à gradient d'indice augmente avec la valeur dudit gradient, et avec l'épaisseur de ladite structure. Ces deux paramètres permettent d'ajuster la direction d'extraction de la lumière, par exemple pour l'adapter à l'orientation d'une fibre optique au-dessus de la structure à gradient d'indice.

Lors de l'injection, les rayons suivent le même trajet dans l'autre sens, de sorte que les avantages de l'invention se retrouvent aussi bien pour une injection que pour une extraction de lumière.

On a représenté à la figure 1B, de manière schématique, le trajet d'extraction d'un faisceau lumineux, hors du dispositif de couplage 100, ici vers une fibre optique 110.

La fibre optique 110 s'étend ici selon un axe sensiblement normal au plan du substrat, c'est-à-dire normal au plan (xOy). Elle est avantageusement inclinée de quelques degrés relativement à la normale au plan du substrat, par exemple moins de 10°.

L'invention n'est cependant pas limitée à une telle orientation de la fibre optique, qui peut s'étendre au-dessus du substrat en étant plus fortement inclinée relativement à la normale au plan du substrat. Cela relâche les contraintes sur le gradient d'indice dans la structure à gradient d'indice, et sur l'épaisseur de ladite structure.

Le dispositif de couplage 100 permet de limiter une dispersion spectrale liée à l'injection et/ou l'extraction, en comparaison avec les coupleurs optiques de l'art antérieur. En particulier, un angle d'extraction reste constant sur une bande spectrale large de 200 nm. Cette faible dispersion spectrale présente un intérêt particulier notamment dans le domaine des télécommunications optiques, où l'on souhaite coder l'information sur plusieurs longueurs d'onde. L'invention permet notamment d'utiliser une unique fibre optique pour recevoir et/ou injecter différentes longueurs d'onde.

Le dispositif de couplage 100 offre également un couplage insensible à la polarisation.

Enfin, le dispositif de couplage 100 n'impose pas l'ajout d'un réflecteur pour extraire la lumière dans un seul demi-espace.

La faible dispersion spectrale, observée par les inventeurs, peut être expliquée de la façon suivante.

On note $\alpha(\lambda)$ l'angle de déviation de la lumière, lors de l'entrée dans la structure à gradient d'indice 139 depuis l'étage de guidage.

$$\alpha(\lambda) = \tan^{-1}\left(\sqrt{\frac{n_c^2}{n_{eff}^2(\lambda)} - 1}\right)$$

On a $\qquad$ , avec $n_c$ l'indice optique du guide d'onde, et $n_{eff}(\lambda)$ l'indice effectif du mode guidé dans le guide d'onde.

Par conséquent, lorsque la longueur d'onde augmente, $\alpha(\lambda)$ augmente, car l'indice effectif du mode guidé dans le guide d'onde diminue par délocalisation. En d'autres termes, la composante verticale (selon (Oz)) du vecteur d'onde augmente lors de l'entrée dans la structure 139.

Dans le même temps, lorsque la longueur d'onde augmente, l'épaisseur optique du gradient selon (Oz) vu par la lumière diminue. Cela se traduit par une diminution de la déviation de rayons, $\theta(\lambda)$, liée à la traversée de la structure

$$\theta(\lambda) = \tan^{-1}\left(h * \frac{\lambda_0}{\lambda} * \frac{\delta n}{\delta x}\right)$$

à gradient d'indice 139. On a en particulier $\qquad$ , avec $\frac{\delta n}{\delta x}$ le gradient selon (Ox) de l'indice optique moyen dans la structure à gradient d'indice 139.

L'augmentation initiale de la déviation, en entrée de la structure 139, est donc compensée par la diminution de la déviation, lors de la traversée de ladite structure. Ainsi, la déviation totale reste sensiblement constante, sur une large plage de longueurs d'onde.

Le même phénomène se produit lorsque les rayons lumineux se déplacent dans l'autre sens, pour une injection de lumière dans le guide d'onde.

On remarque qu'un couplage optique entre le dispositif de couplage selon l'invention et une fibre optique orientée selon la normale au substrat se traduit simplement par la vérification de la condition suivante :

$$\alpha(\lambda) + \theta(\lambda) = \frac{\pi}{2}$$

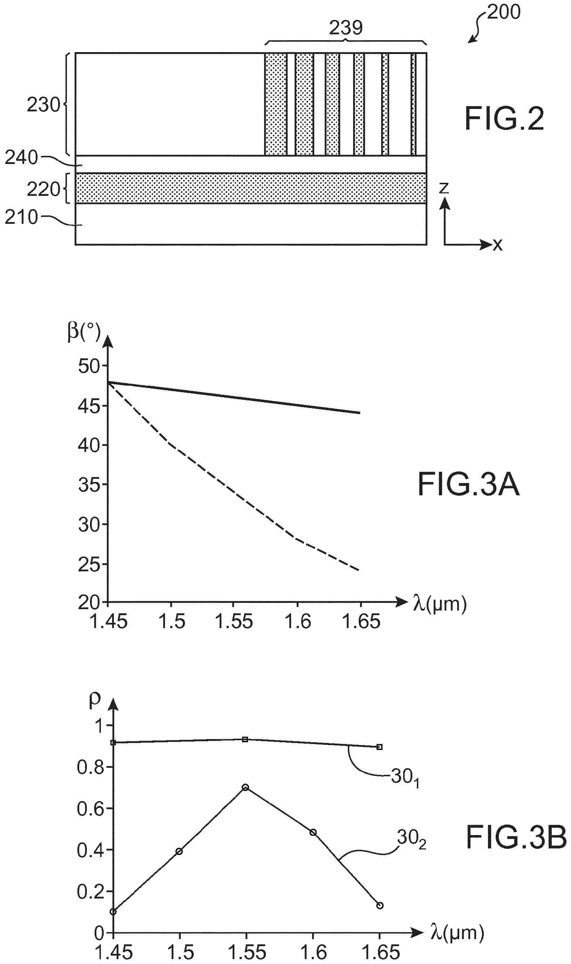

La figure 2 illustre de manière schématique un deuxième mode de réalisation d'un dispositif de couplage 200 selon l'invention.

Le dispositif de couplage 200 ne diffère du dispositif de couplage 100 qu'en ce qu'il comprend, en outre, une couche intercalaire 240, disposée entre l'étage de guidage 220 et l'étage de couplage 230, en contact physique direct avec ces derniers.

La couche intercalaire 240 présente un indice optique inférieur à celui du guide d'onde. De préférence, la couche intercalaire 240 est constituée d'un même matériau que la couche directement adjacente à l'étage de guidage (ici le substrat 210). Ici, la couche intercalaire 240 est constituée de silice.

L'épaisseur de la couche intercalaire 240, selon l'axe (Oz), est inférieure à la longueur d'onde $\lambda_0$ guidée dans le guide d'onde. La lumière peut ainsi se propager par évanescence au-travers de la couche intercalaire 240, entre l'étage de couplage et l'étage de guidage.

La couche intercalaire 240 permet de contrôler une longueur de fuite d'un faisceau lumineux extrait du guide d'onde, cette longueur de fuite déterminant la largeur du faisceau extrait en sortie du dispositif de couplage 200.

Le même phénomène se produit lorsque les rayons lumineux se déplacent dans l'autre sens, pour une injection de lumière dans le guide d'onde. On peut ainsi adapter la largeur du faisceau extrait à une taille de mode dans la fibre optique, lors d'une extraction du guide d'onde vers une fibre optique telle que représentée en figure 1B, et lors d'une injection de lumière depuis la fibre optique vers le guide d'onde.

En pratique, la taille du mode guidé dans la fibre optique est une donnée d'entrée.

On souhaite que cette taille de mode soit égale à la longueur de fuite, dans la couche intercalaire 240. On détermine donc une épaisseur de couche intercalaire 240, permettant d'obtenir la longueur de fuite souhaitée.

La longueur de fuite fixe une valeur maximale du gradient d'indice dans la structure à gradient d'indice 239, la lumière devant fuir sur toute cette longueur. Il faut en effet s'assurer que ce gradient soit suffisamment faible pour que l'indice optique moyen en chaque point de la structure à gradient d'indice 239 reste supérieure à $n_{eff}$ sur toute la longueur de fuite souhaitée, permettant ainsi la fuite de lumière.

On choisit de préférence cette valeur maximale du gradient, ce qui permet de limiter l'épaisseur de la structure à gradient d'indice, selon l'axe (Oz).

On peut ensuite ajuster l'épaisseur de la structure à gradient d'indice, pour adapter l'angle d'extraction à l'inclinaison d'une fibre optique telle que représentée en figure 1B.

Les figures 3A et 3B illustrent des résultats de simulation du fonctionnement d'un dispositif de couplage tel que représenté en figure 2.

La longueur d'onde centrale $\lambda_0$ vaut ici 1,55 µm.

La distance d (voir figure 1B) vaut 200 nm.

L'épaisseur de la couche intercalaire est de 0,35 µm.

La structure à gradient d'indice présente une épaisseur de 5 µm.

La longueur des premières régions varie linéairement et en s'éloignant du guide d'onde, depuis une longueur de 50 nm jusqu'à une longueur de 150 nm. La longueur des secondes régions varie donc en sens inverse, linéairement également.

On fait varier autour de $\lambda_0$ la longueur d'onde couplée, de 1,45 µm à 1,65 µm, soit une largeur de bande spectrale de 200 nm.

En figure 3A, on a représenté en trait plein, l'angle d'extraction β, en degrés d'angle, en fonction de la longueur d'onde $\lambda$, en µm.

β reste sensiblement constant sur toute la bande spectrale considérée. En d'autres termes, on observe un fonctionnement achromatique du dispositif de couplage selon l'invention, ici sur une bande spectrale de 200 nm de large. Le dispositif de couplage selon l'invention permet donc le couplage d'une large bande spectrale, ici au moins 200 nm de large, vers une même direction dans l'espace libre hors de l'étage de guidage.

Pour comparaison, on a également représenté, en trait pointillés, l'angle d'extraction en fonction de la longueur d'onde, dans un dispositif de l'art antérieur tel que décrit en introduction. Le dispositif de l'art antérieur comporte ici un réseau de diffraction ayant un pas de 0,9 µm, constitué pour moitié de silicium et pour moitié de silice. Il comporte également un miroir de renvoi, à une distance optique quart d'onde du réseau.

Dans le dispositif de l'art antérieur, l'angle d'extraction varie fortement en fonction de la longueur d'onde (variation d'environ 10° de l'angle d'extraction pour une variation de longueur d'onde d'environ 50 nm).

L'invention offre donc des performances nettement améliorées en comparaison avec l'art antérieur, en termes de stabilité de l'angle d'extraction en fonction de la longueur d'onde.

La polarisation influence, comme la longueur d'onde, les composantes de vecteur d'onde de la lumière dans la structure à gradient d'indice. L'invention offre donc également des performances nettement améliorées en comparaison avec l'art antérieur, en termes de stabilité de l'angle d'extraction en fonction de la polarisation. Le dispositif de couplage selon l'invention est insensible à la polarisation.

Les mêmes avantages se retrouvent lorsque les rayons lumineux se déplacent dans l'autre sens, pour une injection de lumière dans le guide d'onde.

Les simulations ont également montré qu'une variation linéaire des longueurs des secondes régions de la structure à gradient d'indice permet d'obtenir un profil spatial d'extraction du mode quasi-gaussien, et donc une bonne adaptation de mode avec une fibre optique.

De manière plus générale, une variation linéaire en fonction de x, de la proportion du matériau des secondes régions dans un volume cubique $V(x,y,z)$, permet d'obtenir un profil spatial d'extraction du mode quasi-gaussien, et donc une bonne adaptation de mode avec une fibre optique.

A la figure 3B, on a représenté l'efficacité du couplage entre le dispositif de couplage selon l'invention et une fibre optique, en fonction de la longueur d'onde, en µm (courbe $30_1$). L'angle d'extraction est fixe.

Le taux de couplage reste sensiblement constant, à une valeur élevée (environ 90%), sur toute la bande spectrale considérée. Le dispositif de couplage selon l'invention permet donc un couplage efficace avec une fibre optique à mode gaussien. En outre, ce couplage reste efficace sur une large bande spectrale, ici au moins de 200 nm de large,

Pour comparaison, on a également représenté le taux de couplage en fonction de la longueur d'onde, dans le dispositif de l'art antérieur décrit ci-dessus (courbe $30_2$). Dans un tel dispositif, le profil d'extraction est exponentiel, et donc mal adapté au profil gaussien du mode dans la fibre optique. On observe un taux de couplage maximum plus faible (au mieux 70%), et qui varie fortement en fonction de la longueur d'onde.

L'invention offre donc des performances nettement améliorées en comparaison avec l'art antérieur, en termes d'efficacité du couplage avec une fibre optique à mode gaussien. L'amélioration est d'autant plus grande que la variation en fonction de x, de la proportion du matériau des secondes régions dans un volume cubique $V(x,y,z)$, se rapproche d'une variation linéaire. Le coefficient linéaire définissant ladite variation de longueurs détermine notamment la taille de l'enveloppe gaussienne, en sortie du dispositif de couplage selon l'invention.

On suppose que le profil d'extraction gaussien résulte du fait que la variation linéaire de la proportion du matériau des secondes régions, ne se traduit pas par une variation strictement linéaire de la valeur de l'indice optique moyen.

En particulier, d'après l'équation (4) ci-dessus, une variation linéaire de $f_{n1}$ ne se traduit pas par une variation linéaire de $n_{moy}$. La déviation de la lumière dans la structure à gradient d'indice est donc accompagnée d'un effet de légère défocalisation.

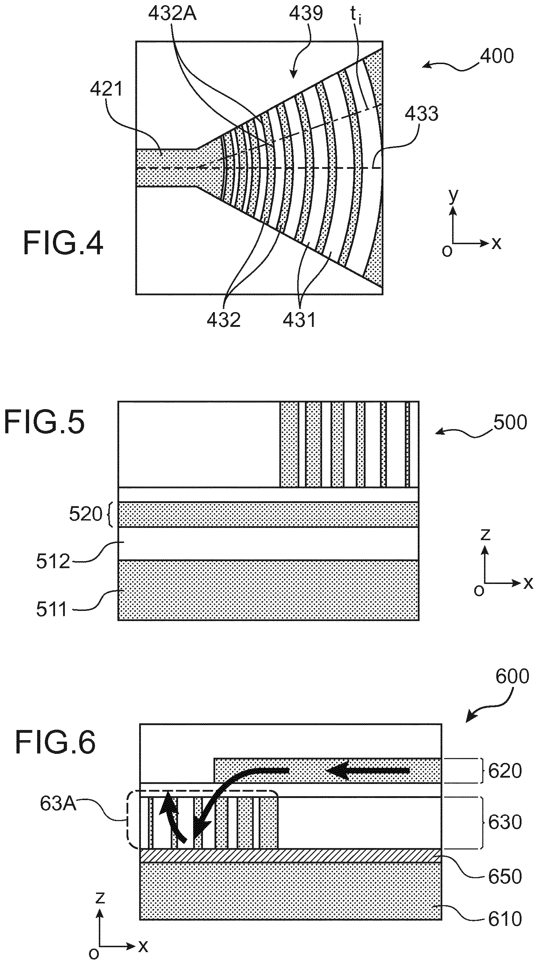

La figure 4 illustre de manière schématique, un troisième mode de réalisation d'un dispositif de couplage 400 selon l'invention.

Ici, l'étage de guidage ne comporte pas de pavé, et la structure à gradient d'indice 43A est superposée avec l'adaptateur, le long de l'axe (Oz). L'adaptateur est dans ce cas plus court que dans le cas précédent des figures 1A à 1C (il n'est pas adiabatique, et laisse diverger la lumière selon l'axe Oy).

A la figure 4, on a représenté une vue schématique du dispositif de couplage 400, dans un plan parallèle au plan (xOy). La figure 4 montre le guide d'onde 421, les bords latéraux de l'adaptateur, sous la structure à gradient d'indice, et la structure à gradient d'indice 439, constituée d'une alternance de premières régions 431 et de secondes régions 432.

La structure à gradient d'indice 439 présente la même section que l'adaptateur, dans des plans parallèles à (xOy).

Les secondes régions 432 présentent des faces 432A, dites faces d'entrée et sorties. En fonctionnement, ces faces sont traversées par le faisceau lumineux couplé par le dispositif de couplage 400. Ces faces s'étendent selon (Oz), et présentent une courbure définie dans des plans parallèles à (xOy). Ladite courbure correspond ici à une portion d'ellipse.

En d'autres termes, les premières et secondes régions sont délimitées ici par des plans qui s'étendent selon (Oz), et présentent une courbure définie dans des plans parallèles à (xOy).

La courbure est adaptée à la forme du front d'onde du faisceau se propageant dans la structure à gradient d'indice, lorsque celle-ci est superposée à un adaptateur non adiabatique, qui laisse diverger la lumière. En d'autres termes, la forme des premières et secondes régions de la structure à gradient d'indice est adaptée au front d'onde divergeant en sortie du guide d'onde.

Ici, l'indice optique moyen dans la structure à gradient d'indice varie de manière monotone décroissante, au fur et à mesure que l'on s'éloigne du guide d'onde, selon chacun des axes $t_i$ correspondant à la projection orthogonale, dans un plan (xOy) parallèle au plan du substrat, de l'un des rayons du faisceau divergeant se propageant dans la structure à gradient d'indice.

La figure 5 illustre de manière schématique une variante dans laquelle le dispositif de couplage 500 est obtenu à partir d'un empilement dit SOI.

L'empilement SOI, pour silicium sur isolant, comporte une couche isolante de silice 512, intercalée entre un substrat 511 en silicium et une couche supérieure de silicium.

Ici, la couche supérieure en silicium est gravée pour former les éléments en silicium de l'étage de guidage. On peut réaliser les éléments en silicium de l'étage de couplage dans un deuxième empilement SOI, rapporté par collage, ou bien dans une couche déposée en silicium amorphe.

En variante, on peut graver la couche supérieure en silicium, pour former à la fois les éléments en silicium de l'étage de guidage et de l'étage de couplage, afin de réaliser un dispositif de couplage tel que représenté aux figures 1A à 1C.

Afin qu'un faisceau lumineux puisse être suffisamment courbé lors de son passage dans le coupleur optique selon l'invention, il doit traverser une épaisseur du coupleur optique au moins égale à $\frac{\lambda_0}{n_{eff}}$, l'épaisseur étant définie selon (Oz) et $n_{eff}$ étant l'indice effectif du mode guidé dans le guide d'onde.

Dans les modes de réalisation des figures 1A à 5, l'épaisseur H selon (Oz) de la structure à gradient d'indice et du coupleur optique vérifie donc :

$$H \geq \frac{\lambda_0}{n_{eff}} \qquad\qquad (5)$$

Pour les raisons exposées ci-avant, on peut approximer cette inégalité par $H \geq \frac{\lambda_0}{n_c}$, avec $n_c$ l'indice optique du guide d'onde 121.

Pour un couplage à 1550 nm, la hauteur H est d'environ 5 μm, alors que la longueur selon (Ox) des premières régions de la structure à gradient d'indice descend par exemple jusqu'à 50 nm, soit un rapport 100 entre ces deux grandeurs.

A la fabrication, la structure à gradient d'indice peut être réalisée en gravant des tranchées dans une couche pleine. Le rapport 100 mentionné ci-dessus peut alors poser des difficultés technologiques.

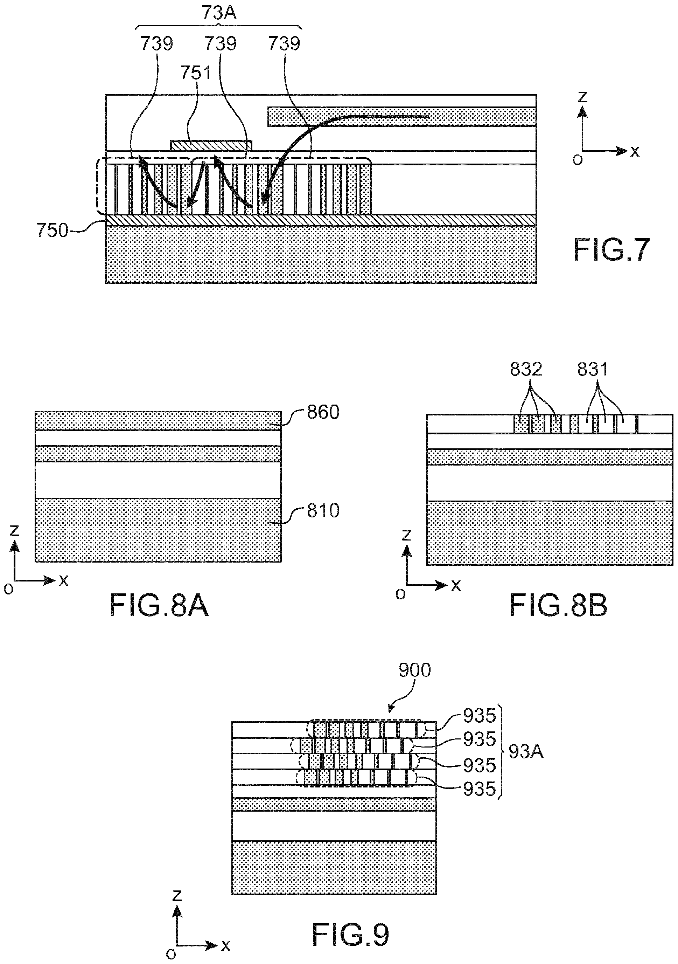

On propose, en figures 6 et 7, deux modes de réalisation, permettant de réduire ce rapport, en diminuant l'épaisseur du coupleur optique.

Le dispositif de couplage 600 de la figure 6 comporte un premier réflecteur 650, qui s'étend dans un plan parallèle à (xOy), du côté du coupleur optique opposé à l'étage de guidage 620.

Le réflecteur 650 réfléchit les rayons autour de $\lambda_0$.

Il est constitué par exemple d'une simple couche de métal.

On a représenté en figure 6 le trajet de la lumière dans le coupleur optique 63A. Grâce au réflecteur 650, la lumière traverse deux fois le coupleur optique 63A dans le sens de l'épaisseur. L'épaisseur apparente du coupleur optique 63A est donc deux fois son épaisseur réelle. La lumière peut ainsi traverser une épaisseur du coupleur optique au moins égale à $\dfrac{\lambda_0}{n_{eff}}$, avec une épaisseur réelle moindre dudit coupleur.

Ce mode de réalisation peut être réalisé à partir d'un empilement SOI, retourné après réalisation de l'étage de guidage, de l'étage de couplage, et le dépôt d'une couche réfléchissante. Le substrat 610 est alors un substrat de silicium par exemple ayant été collé au-dessus de la couche réfléchissante, et distinct du substrat en silicium de l'empilement SOI (retiré en fin de procédé). L'étage de couplage 630 s'étend alors entre l'étage de guidage 620 et le substrat 610.

Le coupleur optique 63A dépasse le long de l'axe (Ox), relativement à la structure haut indice de l'étage de guidage. On évite ainsi de générer des réflexions parasites.

Le dispositif de couplage 700 de la figure 7 comporte en outre un second réflecteur 751, réfléchissant autour de $\lambda_0$, et disposé dans un plan parallèle à (xOy), du même côté du coupleur optique que l'étage de guidage 720. Grâce aux réflecteurs 750 et 751, agencés de part et d'autre du coupleur optique 73A, la lumière traverse au moins trois fois le coupleur optique 73A dans le sens de l'épaisseur. L'épaisseur apparente du coupleur optique 73A est donc au moins trois fois son épaisseur réelle. La lumière peut ainsi traverser une épaisseur du coupleur optique au moins égale à $\dfrac{\lambda_0}{n_{eff}}$, avec une épaisseur réelle bien moindre dudit coupleur.

Dans les modes de réalisation des figures 1A à 5, en revanche, le dispositif de couplage selon l'invention est dépourvu de tout réflecteur agencé au regard du coupleur optique, avec sa face réfléchissante située du côté du coupleur optique.

A la figure 7, le coupleur optique 73A est constitué de plusieurs structures à gradient d'indice 739, juxtaposées le long de l'axe (Ox). On peut ainsi combiner un fort gradient d'indice dans le coupleur optique, et une grande longueur du coupleur optique le long de laquelle le faisceau effectue plusieurs aller-retours entre le premier réflecteur 750 et le second réflecteur 751.

En variante, le coupleur optique est constitué d'une unique structure à gradient d'indice, présentant un gradient d'indice plus faible.

On illustre ensuite, en référence aux figures 8A et 8B, des étapes d'un procédé de fabrication permettant d'obtenir facilement un rapport élevé entre la hauteur du coupleur optique, et la longueur selon des premières régions de la structure à gradient d'indice.

L'idée consiste à réaliser le coupleur optique en plusieurs couches, superposées selon l'axe (Oz).

Dans une première étape, illustrée en figure 8A, on dépose une couche de support 860, ici en silicium amorphe, au-dessus du substrat 810.

Ensuite, on grave des ouvertures traversantes dans la couche de support 860, pour définir une première série de secondes régions 832 selon l'invention, et on remplit les ouvertures gravées par un matériau de remplissage, ici de la silice, que l'on planarise, pour former une première série de premières régions 831 selon l'invention (voir figure 8B).

En répétant plusieurs fois les étapes des figures 8A et 8B, on obtient une structure multicouche d'épaisseur souhaitée, et constituée de plusieurs séries superposées de premières et secondes régions de longueurs monotonement variables.

Ce procédé permet de bénéficier, à chaque étape de gravure, d'un rapport de forme favorable entre la profondeur de la gravure et la section des ouvertures gravées.

Ici, la couche de support est constituée du matériau des secondes régions et le matériau de remplissage est le matériau des premières régions. L'inverse est également possible.

La figure 9 illustre le dispositif de couplage 900 obtenu à l'aide d'un tel procédé. Le coupleur optique 93A est constitué d'une pluralité de couches 935 superposées selon l'axe (Oz), et comportant chacune une série de premières et secondes régions selon l'invention.

Les différentes couches 935 présentent le même gradient d'indice. Elles sont de préférence toutes identiques.

En revanche, elles ne sont pas forcément parfaitement alignées entre elles selon (Ox), puisque l'invention exploite au premier ordre le gradient de la valeur locale d'un indice optique moyen. La tolérance d'alignement est par exemple de l'ordre de quelques pseudo-périodes, où la pseudo-période est la longueur selon (Ox) d'une seconde région et d'une première région adjacente.

Ce mode de réalisation peut être combiné à l'utilisation d'un ou plusieurs réflecteurs, comme illustré en figures 6 et 7.

L'idée à la base de l'invention consiste à réaliser un dispositif de couplage, avec une structure à gradient d'indice dans laquelle l'indice optique moyen, tel que défini ci-avant, varie de manière monotone selon chacun des axes $t_i$ correspondant à la projection orthogonale, dans un plan (xOy) parallèle au plan du substrat, de l'un des rayons du faisceau se propageant dans la structure à gradient d'indice.

La variation est monotonement décroissante au fur et à mesure que l'on s'éloigne du guide d'onde.

L'homme du métier saura réaliser de nombreuses géométries, autres que celles décrites ci-avant, permettant de vérifier cette condition.

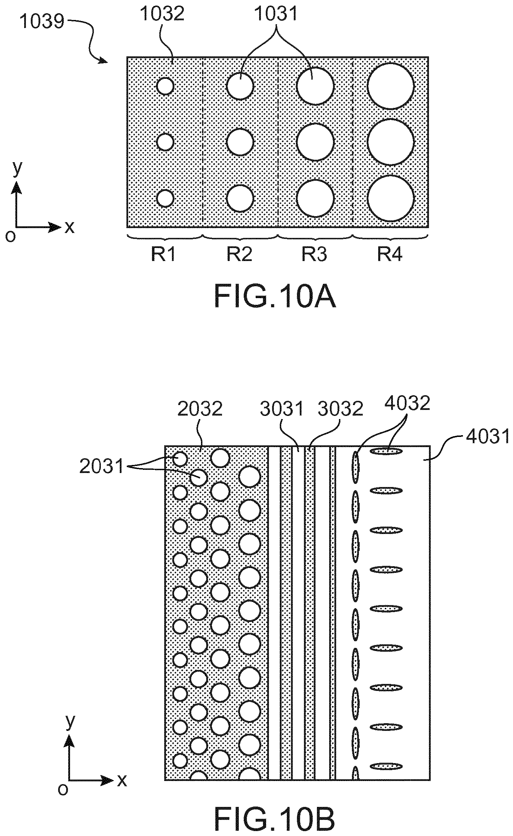

Les figures 10A et 10B en illustrent deux exemples.

Dans le mode de réalisation de la figure 10A, la structure à gradient d'indice 1039 est constituée d'une pleine couche en matériau haut indice (seconde région 1032), dans laquelle s'étendent des inclusions en matériau bas indice (premières régions 1031).

Les inclusions ont une forme de cylindre de révolution, de même hauteur selon (Oz) que la structure à gradient d'indice 1039. Le diamètre des cylindres varie de manière monotone selon l'axe (Oz).

Ici, les cylindres sont répartis dans une pluralité de régions R1, R2, R3, R4, chaque région étant associée à une valeur donnée du diamètre des cylindres. Chaque région R1, R2, R3, R4 présente une forme de parallélépipède rectangle, de longueur inférieure ou égale à $\dfrac{\lambda_0}{2*n_{eff}}$ .

On peut considérer que chacune de ces régions R1, R2, R3, R4 est l'équivalent d'une pseudo-période de la structure à gradient d'indice décrite en référence aux figures 1A à 1C.

Dans le mode de réalisation de la figure 10B, la variation de l'indice optique moyen selon l'axe (Ox), dans des plans parallèles au plan (xOy), est obtenue en combinant :

- des inclusions 2031 en forme de cylindre de révolution en matériau bas indice, dans une couche haut indice 2032 ;
- des parallélépipèdes rectangles 3031, 3032 alternativement en matériau bas indice et haut indice, de longueurs variables ; et
- des inclusions 4032 cylindriques à base ovales en matériau haut indice, dans une couche bas indice 4031.

L'invention n'est pas limitée aux exemples détaillés ci-dessus, et de nombreuses variantes peuvent être mises en œuvre sans sortir du cadre de l'invention.

Dans les exemples détaillés ci-dessous, la structure à gradient d'indice est constituée entièrement par les premier et second matériaux. En variante, elle peut comporter des inclusions d'un troisième matériau.

On a détaillé ci-dessus un dispositif adapté à un couplage à 1550 nm, constitué de silicium et de silice. En variante, le dispositif de couplage peut être constitué de nitrure de silicium (SiN) et de silice, pour un couplage à 1550 nm. Selon une autre variante, le dispositif de couplage peut être constitué de SiGe et de Si, pour un couplage dans le moyen infra-rouge, à une longueur d'onde comprise entre 3 $\mu$m et 12 $\mu$m. Les dimensions de la structure à gradient d'indice sont alors multipliées par un facteur compris entre 2 et 6, relativement aux dimensions pour un couplage à 1550 nm.

**Revendications**

1. Dispositif de couplage (100; 200; 400; 500; 600; 700; 900) comportant un substrat (110 ; 210 ; 511 ; 610 ; 810) dans ou sur lequel sont intégrés :

   - un guide d'onde (121; 421), apte à guider un faisceau lumineux centré sur une longueur d'onde centrale $\lambda_0$ ; et
   - un coupleur optique d'injection et/ou extraction (13A; 63A ; 73A; 93A) ;
   dispositif de couplage comprenant superposés, un étage de guidage (120 ; 220 ; 520 ; 620 ; 720) comportant le guide d'onde et un étage de couplage (130; 230; 630) comportant le coupleur optique, coupleur optique étant constitué d'au moins une structure à gradient d'indice (139 ; 239 ; 439 ; 739 ; 1039), et l'indice optique moyen dans la structure à gradient d'indice variant de manière monotone décroissante dans des plans parallèles au plan du substrat, au fur et à mesure que l'on s'éloigne du guide d'onde (121 ; 421), l'indice optique moyen étant défini comme une valeur moyenne de l'indice optique dans un volume cubique ($V(x,y,z)$) de côté égal à :

$$\frac{\lambda_0}{2 * n_{eff}}$$

avec $n_{eff}$ l'indice effectif du mode guidé dans le guide d'onde (121 ; 421),
ladite valeur moyenne étant une moyenne quadratique des indices optiques de matériaux constitutifs dudit volume cubique, pondérée par la proportion volumique de chacun de ces matériaux dans le volume cubique.

2. Dispositif de couplage (100 ; 200 ; 400 ; 500 ; 600 ; 700 ; 900) selon la revendication 1, **caractérisé en ce que** le coupleur optique (13A; 63A; 73A; 93A) présente une épaisseur apparente supérieure ou égale à $\frac{\lambda_0}{n_{eff}}$ , l'épaisseur apparente étant définie selon un axe orthogonal au plan du substrat et désignant une épaisseur cumulée traversée par le faisceau lumineux provenant du guide d'onde (121; 421) ou arrivant dans le guide d'onde, ledit faisceau lumineux étant centré sur la longueur d'onde centrale $\lambda_0$.

3. Dispositif de couplage (100 ; 200 ; 400 ; 500 ; 900) selon la revendication 1 ou 2, **caractérisé en ce que** le coupleur optique (13A ; 93A) présente une épaisseur supérieure ou égale à $\frac{\lambda_0}{n_{eff}}$ , l'épaisseur étant définie selon un axe orthogonal au plan du substrat.

4. Dispositif de couplage (600 ; 700) selon la revendication 1 ou 2, **caractérisé en ce qu'**il comporte au moins un réflecteur (650; 750; 751) agencé en vis-à-vis du coupleur optique (63A; 73A).

5. Dispositif de couplage (100; 200; 400; 500; 600; 700; 900) selon l'une quelconque des revendications 1 à 4, **caractérisé en ce que** :

   - la structure à gradient d'indice (139 ; 239 ; 439 ; 739 ; 1039) est constituée d'au moins une première et au moins une seconde régions (131, 132; 431, 432 ; 831, 832; 1031, 1032; 2031, 3031, 4031, 2032, 3032, 4032), constituées respectivement d'un premier matériau présentant un premier indice optique, et d'un second matériau présentant un second indice optique supérieur au premier indice optique ; et
   - la proportion du second matériau dans ledit volume cubique *(V(x,y,z))* varie de manière monotone décroissante dans des plans parallèles au plan du substrat, au fur et à mesure que l'on s'éloigne du guide d'onde (121 ; 421).

6. Dispositif de couplage (100 ; 200 ; 400 ; 500 ; 600 ; 700 ; 900) selon la revendication 5, **caractérisé en ce que** la proportion du second matériau dans ledit volume cubique *(V(x,y,z))* varie en outre de manière linéaire dans des plans parallèles au plan du substrat, au fur et à mesure que l'on s'éloigne du guide d'onde (121; 421).

7. Dispositif de couplage (100 ; 200 ; 400 ; 500 ; 600 ; 700 ; 900) selon la revendication 5 ou 6, **caractérisé en ce que** :

   - la structure à gradient d'indice (139; 239; 439; 739) est constituée d'une alternance desdites premières et secondes régions (131, 132; 431, 432 ; 831, 832), réparties les unes à la suite des autres le long d'un axe parallèle à l'axe longitudinal du guide d'onde ;
   - une distance centre à centre entre deux secondes régions voisines (132 ; 432 ; 832), le long d'un axe parallèle à l'axe longitudinal du guide d'onde (121; 421), est inférieure ou égale à $\frac{\lambda_0}{2*n_{eff}}$ .

8. Dispositif de couplage (100; 200; 500 ; 600; 700 ; 900) selon la revendication 7, **caractérisé en ce que** lesdites premières et secondes régions (131, 132; 831, 832) présentent chacune une forme de parallélépipède rectangle.

9. Dispositif de couplage (100 ; 200 ; 500 ; 600 ; 700 ; 900) selon la revendication 8, **caractérisé en ce que** :

   - l'étage de guidage (120; 220; 520; 620; 720) comporte, juxtaposés le long de l'axe longitudinal (1211) du guide d'onde, le guide d'onde (121), un adaptateur (122) dont la largeur décroît en se rapprochant du guide d'onde, et un pavé (123) de largeur constante ; et
- le coupleur optique (13A ; 73A) et le pavé (123) sont superposés ensemble.

**10.** Dispositif de couplage (400) selon la revendication 7, **caractérisé en ce que** :

- l'étage de guidage comporte, juxtaposés le long de l'axe longitudinal du guide d'onde, le guide d'onde (421), et un adaptateur dont la largeur décroît en se rapprochant du guide d'onde ;
- le coupleur optique et l'adaptateur sont superposés ensemble ; et
- lesdites premières et secondes régions (431, 432) sont délimitées les unes relativement aux autres par des plans orthogonaux au plan du substrat, à section incurvée dans des plans parallèles au plan du substrat.

**11.** Dispositif de couplage (200; 400; 500; 600; 700; 900) selon l'une quelconque des revendications 1 à 10, **caractérisé en ce qu'**il comporte en outre une couche intercalaire (240), d'indice optique inférieur à celui du guide d'onde, intercalée entre l'étage de guidage (220 ; 520 ; 620 ; 720) et le coupleur optique (63A ; 73A; 93A).

**12.** Dispositif de couplage (100; 200; 400; 500; 600; 700; 900) selon l'une quelconque des revendications 1 à 11, **caractérisé en ce que** la structure à gradient d'indice (139 ; 239 ; 439 ; 739 ; 1039) est invariante selon son épaisseur, l'épaisseur étant définie selon un axe orthogonal au plan du substrat.

**13.** Dispositif de couplage (900) selon l'une quelconque des revendications 1 à 11, **caractérisé en ce que** :

- la structure à gradient d'indice est constituée d'une pluralité de couches (935), identiques entre elles, et superposées selon un axe orthogonal au plan du substrat ;
- chacune desdites couches (935) est invariante selon son épaisseur, l'épaisseur étant définie selon un axe orthogonal au plan du substrat ; et
- lesdites couches (935) sont désalignées les unes relativement aux autres.

**14.** Dispositif de couplage (700) selon l'une quelconque des revendications 1 à 13, **caractérisé en ce que** le coupleur optique (73A) comporte plusieurs structures à gradient d'indice (739), juxtaposées les unes à la suite des autres le long d'un axe parallèle à l'axe longitudinal du guide d'onde.

**15.** Procédé de fabrication d'un dispositif de couplage (900) selon l'une quelconque des revendications 1 à 14, caractérisé que ce que l'au moins une structure à gradient d'indice est réalisée à l'aide de plusieurs cycles successifs de :

- dépôt d'une couche de support (860) ;
- gravure d'ouvertures traversantes dans la couche de support ; puis
- remplissage des ouvertures gravées par un matériau de remplissage et planarisation.

**Patentansprüche**

**1.** Kopplungsvorrichtung (100; 200; 400; 500; 600; 700; 900), die ein Substrat (110; 210; 511; 610; 810) enthält, in oder auf dem integriert sind:

- ein Wellenleiter (121; 421), der einen auf eine zentrale Wellenlänge $\lambda_0$ zentrierten Lichtstrahl leiten kann; und
- ein optischer Koppler (13A; 63A; 73A; 93A) zum Ein- und/oder Auskoppeln;
wobei die Kopplungsvorrichtung übereinanderliegend eine den Wellenleiter aufweisende Führungsstufe (120; 220; 520; 620; 720) und eine den optischen Koppler aufweisende Kopplungsstufe (130; 230; 630) enthält, wobei der optische Koppler aus mindestens einer Gradientenindexstruktur (139; 239; 439; 739; 1039) besteht, und der mittlere optische Index in der Gradientenindexstruktur in Ebenen parallel zur Ebene des Substrats mit zunehmender Entfernung vom Wellenleiter (121; 421) monoton abnehmend variiert, wobei der mittlere optische Index definiert ist als ein Mittelwert des optischen Index in einem kubischen Volumen ($V(x,y,z)$) mit der Kante gleich:

$$\frac{\lambda_0}{2 * n_{eff}}$$

worin $n_{eff}$ der effektive Index der geführten Mode im Wellenleiter (121; 421) ist,
wobei dieser Mittelwert ein quadratisches Mittel der optischen Indizes der Materialien ist, aus denen das kubische Volumen besteht, gewichtet mit dem Volumenanteil jedes dieser Materialien am kubischen Volumen.

2. Kopplungsvorrichtung (100; 200; 400; 500; 600; 700; 900) nach Anspruch 1, **dadurch gekennzeichnet, dass** der optische Koppler (13A; 63A; 73A; 93A) eine scheinbare Dicke aufweist, die größer oder gleich $\frac{\lambda_0}{n_{eff}}$ ist, wobei die scheinbare Dicke entlang einer Achse orthogonal zur Ebene des Substrats definiert ist und eine kumulative Dicke bezeichnet, die von dem aus dem Wellenleiter (121; 421) stammenden oder in den Wellenleiter eintreffenden Lichtstrahl durchquert wird, wobei der Lichtstrahl auf die zentrale Wellenlänge $\lambda_0$ zentriert ist.

3. Kopplungsvorrichtung (100; 200; 400; 500; 900) nach Anspruch 1 oder 2, **dadurch gekennzeichnet, dass** der optische Koppler (13A; 93A) eine Dicke größer oder gleich $\frac{\lambda_0}{n_{eff}}$ aufweist, wobei die Dicke entlang einer Achse orthogonal zur Ebene des Substrats definiert ist.

4. Kopplungsvorrichtung (600; 700) nach Anspruch 1 oder 2, **dadurch gekennzeichnet, dass** sie mindestens einen Reflektor (650; 750; 751) enthält, der dem optischen Koppler (63A; 73A) gegenüberliegend angeordnet ist.

5. Kopplungsvorrichtung (100; 200; 400; 500; 600; 700; 900) nach einem der Ansprüche 1 bis 4, **dadurch gekennzeichnet, dass**:

   - die Gradientenindexstruktur (139; 239; 439; 739; 1039) aus mindestens einem ersten und mindestens einem zweiten Bereich (131, 132; 431, 432; 831, 832; 1031, 1032; 2031, 3031, 4031, 2032, 3032, 4032) besteht, die aus einem ersten Material mit einem ersten optischen Index bzw. einem zweiten Material mit einem zweiten optischen Index, der höher als der erste optische Index ist, bestehen; und
   - der Anteil des zweiten Materials an dem kubischen Volumen ($V(x, y, z)$) in Ebenen parallel zur Ebene des Substrats mit zunehmender Entfernung vom Wellenleiter (121; 421) monoton abnimmt.

6. Kopplungsvorrichtung (100; 200; 400; 500; 600; 700; 900) nach Anspruch 5, **dadurch gekennzeichnet, dass** ferner der Anteil des zweiten Materials an dem kubischen Volumen ($V(x, y, z)$) in Ebenen parallel zur Ebene des Substrats mit zunehmender Entfernung vom Wellenleiter (121; 421) linear variiert.

7. Kopplungsvorrichtung (100; 200; 400; 500; 600; 700; 900) nach Anspruch 5 oder 6, **dadurch gekennzeichnet, dass**:

   - die Gradientenindexstruktur (139; 239; 439; 739) aus abwechselnden ersten und zweiten Bereichen (131, 132; 431, 432; 831, 832) besteht, die nacheinander entlang einer Achse parallel zur Längsachse des Wellenleiters verteilt sind;
   - ein Mittenabstand zwischen zwei benachbarten zweiten Bereichen (132; 432; 832) entlang einer Achse parallel zur Längsachse des Wellenleiters (121; 421) kleiner oder gleich $\frac{\lambda_0}{2*n_{eff}}$ ist.

8. Kopplungsvorrichtung (100; 200; 500; 600; 700; 900) nach Anspruch 7, **dadurch gekennzeichnet, dass** die ersten und zweiten Bereiche (131, 132; 831, 832) jeweils eine rechteckige Parallelepipedform aufweisen.

9. Kopplungsvorrichtung (100; 200; 500; 600; 700; 900) nach Anspruch 8, **dadurch gekennzeichnet, dass**:

   - die Führungsstufe (120; 220; 520; 620; 720) entlang der Längsachse (1211) des Wellenleiters nebeneinanderliegend den Wellenleiter (121), einen Adapter (122), dessen Breite mit Annäherung an den Wellenleiter abnimmt, und einen Block (123) mit konstanter Breite umfasst; und
   - der optische Koppler (13A; 73A) und der Block (123) zusammen übereinandergeordnet sind.

10. Kopplungsvorrichtung (400) nach Anspruch 7, **dadurch gekennzeichnet, dass**:

   - die Führungsstufe entlang der Längsachse des Wellenleiters nebeneinanderliegend den Wellenleiter (421) und einen Adapter, dessen Breite mit Annäherung an den Wellenleiter abnimmt, umfasst; und
- der optische Koppler und der Adapter zusammen übereinandergeordnet sind; und
- die ersten und zweiten Bereiche (431, 432) durch Ebenen orthogonal zur Ebene des Substrats mit gekrümmten Querschnitten in Ebenen parallel zur Ebene des Substrats gegeneinander abgegrenzt sind.

**11.** Kopplungsvorrichtung (200; 400; 500; 600; 700; 900) nach einem der Ansprüche 1 bis 10, **dadurch gekennzeichnet, dass** sie ferner eine Zwischenschicht (240) mit einem niedrigeren optischen Index als der Wellenleiter umfasst, die zwischen der Führungsstufe (220; 520; 620; 720) und dem optischen Koppler (63A; 73A; 93A) angeordnet ist.

**12.** Kopplungsvorrichtung (100; 200; 400; 500; 600; 700; 900) nach einem der Ansprüche 1 bis 11, **dadurch gekennzeichnet, dass** die Gradientenindexstruktur (139; 239; 439; 739; 1039) in ihrer Dicke unveränderlich ist, wobei die Dicke entlang einer Achse orthogonal zur Ebene des Substrats definiert ist.

**13.** Kopplungsvorrichtung (900) nach einem der Ansprüche 1 bis 11, **dadurch gekennzeichnet, dass**:

- die Gradientenindexstruktur aus einer Vielzahl von Schichten (935) besteht, die untereinander identisch sind und entlang einer Achse orthogonal zur Ebene des Substrats übereinandergeordnet sind;
- jede der Schichten (935) in ihrer Dicke unveränderlich ist, wobei die Dicke entlang einer Achse orthogonal zur Ebene des Substrats definiert ist; und
- die Schichten (935) zueinander versetzt angeordnet sind.

**14.** Kopplungsvorrichtung (700) nach einem der Ansprüche 1 bis 13, **dadurch gekennzeichnet, dass** der optische Koppler (73A) mehrere Gradientenindexstrukturen (739) umfasst, die entlang einer Achse parallel zur Längsachse des Wellenleiters aufeinanderfolgend nebeneinander angeordnet sind.

**15.** Verfahren zur Herstellung einer Kopplungsvorrichtung (900) nach einem der Ansprüche 1 bis 14, **dadurch gekennzeichnet, dass** die mindestens eine Gradientenindexstruktur mittels mehrerer aufeinanderfolgender Zyklen hergestellt wird, nämlich:

- Abscheiden einer Trägerschicht (860);
- Einätzen von Durchgangsöffnungen in der Trägerschicht; dann
- Befüllen der eingeätzten Öffnungen mit einem Füllmaterial und Planarisieren.

**Claims**

**1.** Coupling device (100; 200; 400; 500; 600; 700; 900) comprising a substrate (110; 210; 511; 610; 810) in or on which the following are integrated:

- a waveguide (121; 421) capable of guiding a light beam centred on a central wavelength $\lambda_0$; and
- an optical injection and/or extraction coupler (13A; 63A; 73A; 93A);
the coupling device comprising a guide stage (120; 220; 520; 620; 720) comprising the waveguide and a coupling stage (130; 230; 630) comprising the optical coupler, superposed one on the other, the optical coupler being composed of at least one index gradient structure (139; 239; 439; 739; 1039), and the average optical index in the index gradient structure varying monotonously, decreasing in planes parallel to the plane of the substrate, as the distance from the waveguide (121; 421) increases, the average optical index being defined as being an average value of the optical index in a cubic volume ($V(x,y,z)$) with a side dimension equal to:

$$\frac{\lambda_0}{2 * n_{eff}}$$

in which $n_{eff}$ is the effective index of guided mode in the waveguide (121; 421);
said average value being a root mean square of the optical indexes of materials forming said cubic volume, weighted by the volume proportion of each of these materials in the cubic volume.

**2.** Coupling device (100; 200; 400; 500; 600; 700; 900) according to claim 1, **characterised in that** the apparent thickness of the optical coupler (13A; 63A; 73A; 93A) is more than or equal to $\frac{\lambda_0}{n_{eff}}$, the apparent thickness being defined along an axis orthogonal to the plane of the substrate and designating a cumulated thickness through which the light beam passes, wherein said light beam comes from the waveguide (121; 421) or arrives into the waveguide, said light beam being centred on the central wavelength $\lambda_0$.

3. Coupling device (100; 200; 400; 500; 600; 700; 900) according to claim 1 or 2, **characterised in that** the thickness of the optical coupler (13A; 93A) is more than or equal to $\frac{\lambda_0}{n_{eff}}$, the thickness being defined along an axis orthogonal to the plane of the substrate.

4. Coupling device (600; 700) according to claim 1 or 2, **characterised in that** it comprises at least one reflector (650; 750; 751), positioned facing the optical coupler (63A; 73A).

5. Coupling device (100; 200; 400; 500; 600; 700; 900) according to any one of claims 1 to 4, **characterised in that**:

   - the index gradient structure (139; 239; 439; 739; 1039) is composed of at least one first region and at least one second region (131, 132; 431, 432; 831, 832; 1031, 1032; 2031, 3031, 4031, 2032, 3032, 4032), composed of a first material with a first optical index, and a second material with a second optical index greater than the first optical index respectively; and
   - the proportion of the second material in said cubic volume *(V(x,y,z))* varies monotonously, decreasing in planes parallel to the plane of the substrate, as the distance from the waveguide (121; 421) increases.

6. Coupling device (100; 200; 400; 500; 600; 700; 900) according to claim 5, **characterised in that** the proportion of the second material in said cubic volume (*V(x,y,z)*) varies also linearly in planes parallel to the plane of the substrate, as the distance from the waveguide (121; 421) increases.

7. Coupling device (100; 200; 400; 500; 600; 700; 900) according to claim 5 or 6, **characterised in that**:

   - the index gradient structure (139; 239; 439; 739) is composed of an alternation of said first and second regions (131, 132; 431, 432; 831, 832), distributed one after the other along an axis parallel to the longitudinal axis of the waveguide;
   - a centre-to-centre distance between two neighbouring second regions (132; 432; 832), along an axis parallel to the longitudinal axis of the waveguide (121; 421), is less than or equal to $\frac{\lambda_0}{2*n_{eff}}$.

8. Coupling device (100; 200; 500; 600; 700; 900) according to claim 7, **characterised in that** each of said first and second regions (131, 132; 831, 832) is in the form of a rectangular parallelepiped.

9. Coupling device (100; 200; 500; 600; 700; 900) according to claim 8, **characterised in that**:

   - the guide stage (120; 220; 520; 620; 720) comprises the waveguide (121), a taper (122) the width of which decreases with decreasing distance from the waveguide, and a pad (123) with constant width, juxtaposed along the longitudinal axis (1211) of the waveguide; and
   - the optical coupler (13A; 73A) and the pad (123) are superposed together.

10. Coupling device (400) according to claim 7, **characterised in that**:

   - the guide stage comprises the waveguide (421) and a taper the width of which decreases with decreasing distance from the waveguide, juxtaposed along the longitudinal axis of the waveguide;
   - the optical coupler and the taper are superposed together; and
   - said first and second regions (431, 432) are delimited relative to each other by planes orthogonal to the plane of the substrate, with a curved section in planes parallel to the plane of the substrate.

11. Coupling device (200; 400; 500; 600; 700; 900) according to any one of claims 1 to 10, **characterised in that** it also comprises a spacer layer (240), with optical index less than that of the waveguide, intercalated between the guide stage (220; 520; 620; 720) and the optical coupler (63A; 73A; 93A).

12. Coupling device (100; 200; 400; 500; 600; 700; 900) according to any one of claims 1 to 11, **characterised in that** the index gradient structure (139; 239; 439; 739; 1039) is invariable along its thickness, the thickness being defined along an axis orthogonal to the plane of the substrate.

13. Coupling device (900) according to any one of claims 1 to 11, **characterised in that**:

   - the index gradient structure is composed of a plurality of layers (935), identical to each other and superposed along an axis orthogonal to the plane of the substrate;
   - each of said layers (935) is invariable along its thickness, the thickness being defined along an axis orthogonal to the plane of the substrate; and
   - said layers (935) are misaligned relative to each other.

14. Coupling device (700) according to any one of claims 1 to 13, **characterised in that** the optical coupler (73A) comprises several index gradient structures (739), juxtaposed one after the other along an axis parallel to the longitudinal axis of the waveguide.

15. Method of fabrication of a coupling device (900) according to any one of claims 1 to 14, **characterised in that** the at least one index gradient structure is made using several successive cycles as follows:

   - deposit a support layer (860);
   - etch through openings in the support layer; then
   - fill the etched openings with an infill material, and planarize.

**FIG.1A**

132    133    100

d    d

130
120
110

z
y    x

121    122    123    12A

V (x,y,z)

13B    13A;139    110

130    131    132

120    **FIG.1B**

110

z
o    x

12B    **FIG.1C**

1211

12B

y
o    x

121    122    123
12A

FIG.2

FIG.3A

FIG.3B

FIG.4

FIG.5

FIG.6

FIG.7

FIG.8A

FIG.8B

FIG.9

FIG.10A

FIG.10B

**EP 3 460 547 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3027689
- US 2014314374 A
- US 2004156589 A

**Littérature non-brevet citée dans la description**

- **DIRK TAILLAERT.** Grating Couplers for Coupling between Optical Fibers and Nanophotonic Waveguides. *Japanese Journal of Applied Physics,* 2006, vol. 45 (8A), 6071-6077